# EUROPEAN PATENT SPECIFICATION

(11) **EP 1 636 029 B1**
(45) Date of publication and mention of the grant of the patent: **04.02.2009**
(21) Application number: 04744148.0
(22) Date of filing: 11.06.2004
(51) Int. Cl.: B32B 27/34

(54) **MULTILAYER SHRINK FILM**
MEHRSCHICHTIGE SCHRUMPFFOLIE
FILM MULTICOUCHES RETRACTABLE

(30) Priority: 13.06.2003 IT MI20001203
(43) Date of publication of application: 22.03.2006
(73) Proprietor: Tecno Coating Engineering S.r.l., 28015 Momo (NO) (IT)
(72) Inventor: GINI, Claudio, I-28047 Oleggio (IT)
(74) Representative: Fisauli, Beatrice A. M.
(86) International application number: PCT/IB2004/002497
(87) International publication number: WO 2004/110755

(56) References cited:
- EP-A- 0 800 915

## Description

This invention relates to a film formed by overlaid layers constituted by thermoplastic polymers of different natures, wherein at least two layers are constituted by a polyamide.

Said film is heat shrinkable, being biaxially oriented. It is also perfectly transparent after shrinkage, and has excellent mechanical characteristics and barrier properties to gases, in particular oxygen.

The film according to the invention is therefore suitable for the packaging and storage of perishable food and non-food products.

The packaging of perishable foodstuffs has formed the subject of countless research and development projects for years, relating both to the packaging materials and the techniques used.

Especially as regards the field of fresh and processed meat, cheese, fish and other perishable foodstuffs, research has focused on producing packaging materials which basically offer the following performance:
- a high barrier to oxygen, steam and flavourings, which increases the life of the packaged product;
- good mechanical characteristics, so that the contents are protected during transport and can be packaged with automatic machinery;
- optical characteristics of transparency and gloss, so that the appearance of the product does not deteriorate and attractive packs are obtained;
- easy sealing to close the wrapping and good strength of said welding;
- good adherence of the wrapping to the contents for various reasons, including preservation of the product.

The use of polymer film has solved many of these problems. In practice, the intrinsic characteristics of the individual polymers are combined to produce a film consisting of a number of laminated or coextruded layers, with the result that the final properties of the multilayer film are the sum of the characteristics of the individual layers.

It is also necessary for the various layers of said multilayer film to adhere well to one another.

The prior art relates to the production of multilayer shrink films wherein the middle layer, which acts as a gas barrier, can be constituted by polyvinylidene chloride copolymer (PVDC), while the outer layers are generally made of polyolefins.

This type of structure is very common, and has been used for many years.

One reason why the barrier layer is positioned in the middle of the laminate is that said layer is usually constituted by a polymer with a high Young's modulus, whereas the polymers that constitute the other layers have a low modulus. If said barrier layer were positioned asymmetrically in relation to the other layers, the laminate would curl as a result of the greater membrane tension exerted.

The polymer that constitutes the barrier layer, in addition to having a high modulus, normally melts at a higher temperature than the polymers that constitute the other layers, and the fact that said barrier layer is located in the interior of the laminate constitutes a problem as regards welding.

To eliminate this drawback and give the film greater mechanical strength, and especially abrasion and puncture resistance, the technique of selective crosslinking of the polymers that make up one or more layers is used. Said technique makes said polymers partly unmeltable, and in any event increases their melting point. Melting of the layers which come into contact with the heating plates during welding is consequently prevented by crosslinking them.

More recently, polyvinylidene chloride copolymer has been partly replaced by another polymer with barrier properties, namely ethylene/vinyl alcohol copolymer (EVOH).

These shrink film structures usually comprise EVOH in the middle layer, sandwiched by polyolefins in the outer layers. Adherence between the various layers can be obtained with the use of special types of modified polyolefins, also called "adhesives".

Mechanical strength and adherence between the layers can be improved by subjecting the film to irradiation with high-energy particles.

However, although the crosslinking technique solves the welding problem without causing curling and gives the film good mechanical strength, it also gives rise to a serious problem, because it makes the polymers that constitute the film partly unmeltable, and this prevents them from being recycled.

An alternative technique to selective crosslinking, which would solve the welding problems and increase the mechanical strength of the film, would be to use high-strength polymers with a high melting point in the outer layer of the film.

European patent application EP 0 800 915 A2 discloses a multilayer film using hight young' modulus in the outer layer.

However, in this case the two polymers, ie. the outer and inner ones, differ not only in terms of melting point but also of their modulus of elasticity and degree of crystallinity. As a result, differentiated tensions develop in the structure of the film and the film is pulled to one side, giving rise to the problem of curling already described.

A third problem is loss of transparency (haze) and gloss by the film after shrinking at the application stage. This problem, which adversely affects the final. appearance of the packaging, is mainly due to poor adherence between the layers, which shrink in different ways, and possibly to surface damage caused by the heat applied to obtain the shrinkage.

The above-mentioned problems involved in the prior art are solved by a plastic film conforming to patent application no. EP-A-1 410 902 filed by the present applicant, namely a multilayer, non-crosslinked shrink film with gas barrier properties, characterised by:
- exceptional mechanical strength,
- easy welding and good welding resistance,
- optical characteristics superior to those of ordinary products on the market,
- little or no curling, despite its asymmetrical structure,
- good shrinkage characteristics,
- good adherence to the packaged contents,
- good oxygen and aqueous steam barrier properties.

All these characteristics have been obtained without the need to subject the film to ionising radiation treatment, but using a polymer with high mechanical strength and a high Young's modulus, which melts at a high temperature, in the outer layer.

In order to eliminate the problem of curling, other layers constituted by polymers with a high Young's modulus are inserted in a suitable position inside the laminate; said layers act in such a way as to balance the effect of the outer layer, thus greatly reducing curling, and even eliminating it entirely in some compositions.

However, experiments conducted with numerous compositions demonstrate that these results tend to be somewhat unpredictable. This problem arises when the number of layers with a high modulus is greater than two and, in accordance with said patent application, two or more of said layers are situated inside the laminate on the side of the neutral layer, opposite the side on which the external layer with the high modulus is located, and said two or more inner layers with a high modulus are adjacent to one another. Under said conditions, a single layer with a high modulus is formed in practice, although its chemical nature is not uniform. The result is that during cooling, said layer with a high modulus, composed of layers with different chemical natures, manifests a high degree of sensitivity to the actual process conditions, with the result that the contractions of the various materials that make up said layer interact with one another in a way which is often unpredictable, and always hard to control. Under these circumstances, curling of the laminate is considerably worsened.

The research conducted demonstrates that if a layer of polymer with a low modulus is inserted between two adjacent layers of polymer with a high modulus, the differences between the contractions of the two layers with a high modulus are at least partly absorbed by said layer with a low modulus, with a drastic reduction in the interaction between the two layers with a high modulus, and curling is drastically reduced, or even eliminated, as with the prior art, when the optimum process conditions are present.

When the concepts described above are applied, the research has established a shrink film as defined in enclosed claim 1, some typical preferred configurations are hereinbelow disclosed.

According to a first typical preferred configuration, the laminate according to the invention comprises seven layers (A, B, C, D, E, F and G), starting with the layer in contact with the product, composed as follows:
- layer A, thickness 20%, welding layer - constitutes the inner part of the wrapping, and can be constituted by ionomers containing zinc or sodium, or a low-density polyethylene, or linear low-density polyethylene (LDPE/LLDPE), or an ethylene or octene plastomer;
- layer B, thickness 10%, first adhesive layer - consists of an adhesive polymer selected from among ethylene copolymers or terionomers modified with maleic anhydride, or of an EVA/ethylene methacrylic acid copolymer;
- layer C, thickness 15%, first barrier layer (mainly to aqueous steam) - consists of a polyamide polymer selected from among PA 6, PA 6/66, amorphous or aliphatic PA or a mixture thereof, possibly with the addition of terionomers;
- layer D, thickness 15%, second adhesive layer - consists of an adhesive polymer selected from among ethylene copolymers or terionomers modified with maleic anhydride, or of an EVA/ethylene methacrylic acid copolymer, and may be equal to or different from layer B;
- layer E, thickness 15%, second barrier layer (mainly to aqueous steam) - consists of a polyamide polymer selected from among PA 6, PA 6/66, amorphous or aliphatic PA or a mixture thereof, possibly with the addition of terionomers, and may be equal to or different from layer C; alternatively, PVA (polyvinyl alcohol) or PGA (polyglycolic acid) can be used;
- layer F, thickness 10%, third adhesive layer, consists of an adhesive polymer selected from among ethylene copolymers or terionomers modified with maleic anhydride, or of an EVA/ethylene methacrylic acid copolymer, and may be equal to or different from layers B and D;
- layer G, thickness 15%, outer layer and fourth barrier layer (mainly to aqueous steam) - consists of a polyamide polymer selected from PA 6 and PA 6/66.

There is a 5% variability in the thickness of each layer, except for the two outer layers, for which the variability may be up to 10%. This variability is not a tolerance, but a possible choice, depending on the characteristics to be obtained. For example, if the barrier effect is to be increased, the thickness of the barrier layers will be increased, whereas if the laminate is to be balanced better to reduce curling, the thicknesses of the layers constituted by material with a low Young's modulus will be gauged to distance the layers constituted by materials with a high Young's modulus suitably from one another.

As will be seen, the layer of film which remains on the outside of the packaging is constituted by a polymer with a high modulus and a high melting point, so as to provide high mechanical strength and easy welding, while the inner layer, namely the one in contact with the product, is constituted by an ionomer or another polymer with a low modulus which, in addition to a low melting point to allow welding, also has the property of adhering to the contents of the pack.

In the configuration described, there are two other barrier layers (C and E) in addition to the outer layer, which has the function of providing high mechanical strength and forming a aqueous steam barrier.

Layer B (adhesive layer) is positioned between layer A (welding layer) and layer C (barrier layer) because, as said layers consist of polymers with different natures, they would not adhere well, and hazing and loss of gloss would therefore occur during the shrinkage stage.

In view of the chemical compatibility between the three barrier layers C, D and E, there is no interposition of adhesive.

Conversely, layers D and F (also adhesive layers), are positioned between two barrier layers, not with the function of improving adherence, because the two layers have the same chemical nature and are therefore perfectly compatible, but to distance two layers with a high modulus from one another, placing them in a suitable position in relation to the neutral plane, in order to minimise the curling effect.

In particular, layer D has the function of reducing the interactions between the two layers with a high modulus (C and E) at the cooling stage as far as possible in order to limit, if not eliminate the effects of the process variables on the residual tensions.

The film according to the invention is obtained by means of double- or triple-bubble processes.

The double-bubble process involves extruding a primary tube comprising said seven layers, cooling it with water at the outlet from the extrusion head (first bubble), and then heating it in suitable ovens with infrared heating elements.

When the pre-set temperature is reached, the tube is inflated with compressed air and simultaneously stretched in two directions: longitudinal (MD), namely in the machine direction, due to the effect of the stretching caused by two rollers that rotate at different speeds upstream and downstream of the bubble, and transverse (TD), due to the expansion of the original tube caused by the compressed air blown in (second bubble).

In some cases (triple-bubble process) the tube, flattened by the roller, is subsequently sent to another infrared oven where, being inflated with air at low pressure, it can contract due to the effect of the heat, and may lose some of the shrinkage (third bubble).

The result of said operation connected with the third bubble is partial release of the internal tensions accumulated by the various layers of film, which said tensions may be unevenly distributed between the various layers of the film, and post-recrystallisation.

The stretching and inflation ratio in the first bubble is substantially between 1:3 and 1:5 in the machine direction (MD) and between 1:3 and 1:4.5 respectively in the transverse direction (TD).

This means that a primary tube thickness of between 300 and 1300 µm produces biaxially oriented film with thicknesses substantially between 20 and 60 µm, depending on the stretching percentages applied.

When the film thus obtained is heated at a temperature close to the orientation temperature, it tends to return to its original dimensions, namely to shrink.

Tests conducted on packaging made with laminates according to the invention demonstrate that the film adheres perfectly to all types of content, whether it has a very greasy surface, like processed meat such as smoked bacon, or has very irregular, hard surfaces with sharp edges, like ripe parmesan cheese with rind.

In the case of smoked bacon, the film adheres well to the product after shrinkage without the formation of microcavities containing air, which can cause oxidation of the product, especially if it has a high animal fat content.

In the case of ripe parmesan cheese with rind, the shrinkage percentage and shrinkage force of the film developed during the packaging operation enable the film to be wrapped with care and precision, regardless of any irregularities of shape, without leaving cavities, and thus developing very close contact with the contents.

In practice, it has also been found that said adherence of the film to the contents remains intact for up to twelve months, a period which is generally longer than the usual shelf lives guaranteed by the suppliers of these types of foodstuffs.

Said adherence to the packaged product depends on the surface tension of inner layer A of the film in relation to the nature of the surface of the contents, and on the force with which the film shrinks.

The first phenomenon takes place on a "micro" scale, and relates to the state of the two surfaces (film / product), ensuring good adherence even in the presence of adverse factors like animal fat, which can prevent good adherence.

The second phenomenon takes place on a "macro" scale, and relates to the force with which the film shrinks and consequently adheres to the contents (shrinkage force). It is directly associated with the characteristics of the polymers used in its structure.

In biaxially-orientated shrink film, the parameter directly associated with the shrinkage force is given by the yield point: the higher the yield point of the polymer at ambient temperature, the higher the shrinkage force developed by the film oriented at the application stage.

If the modulus of elasticity is high, the adherence of the film to the contents tends not to relax with time.

In the case of the structure according to the invention, the polyamides used have yield points greater than 25 MPa and moduli of elasticity greater than 3500 MPa. Both are high values, not only in absolute terms, but also when compared with those of the alternative barrier polymers (EVOH, PVDC) used for similar biaxially-oriented films. In the case of these latter polymers, the yield point and modulus of elasticity values for the more rigid and tougher polymer are around 18-20 MPa and 2000-3000 MPa respectively.

In the case of other polymers used to obtain the barrier effect (PVA and PGA), the modulus of elasticity is approx. 800 MPa.

Even perishable products such as processed fresh meat, fresh and ripened cheeses and fish are suitably protected against oxidation and aqueous steam transmission.

The film produced according to the process described above therefore consists of a coextruded, multilayer, heat-shrink, weldable structure with good optical and mechanical characteristics, oxygen and aqueous steam barrier properties, high shrinkage strength and good adherence to the packaged product. The layers also adhere well to one another.

These properties, the list of which is provided by way of example but not of limitation, in particular define a film for wrapping perishable food and non-food products, which possesses the following characteristics:
- protection against the surrounding environment
- low oxygen and aqueous steam transmission
- high mechanical strength
- good weldability
- good presentation of packaged products
- recyclability.

A large-scale trial has been conducted which led to the definition of some specific configurations of laminates that provided very interesting results compared with a high-quality product available on the market.

The polymers used for the trial are normally available on the market. Their trade names are set out in Table 1.

Said specific configurations of laminates are reported in Table 2, while Table 3 shows a comparison with a commercial product called BB.

As will be seen from Table 3, said reference film does not curl, because it has a substantially symmetrical structure. In fact, LLDPE (linear low-density polyethylene) has a modulus of elasticity considerably lower than those of the polyamides used in the examples cited, and comparable with that of an ionomer.

Conversely, the welding resistance of said film is inferior to that of compositions in accordance with the examples cited.

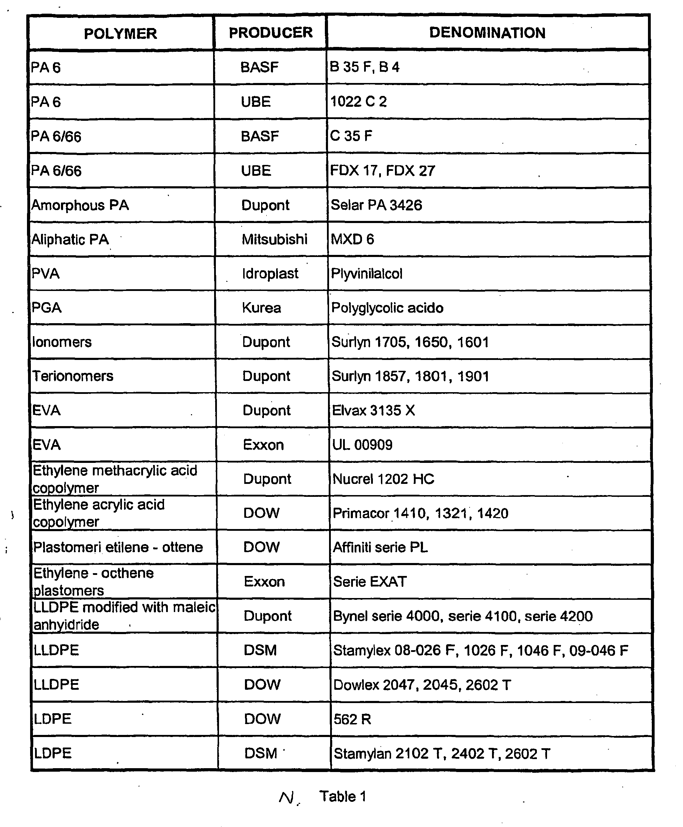

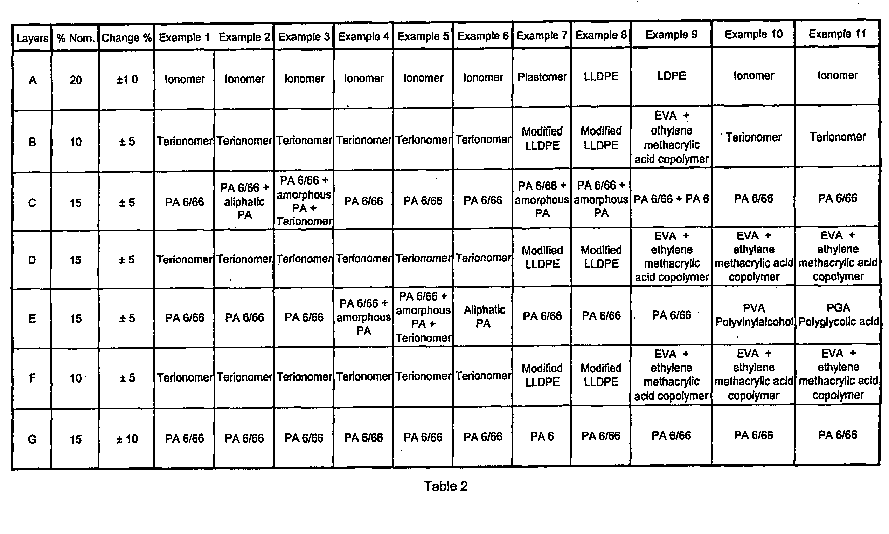

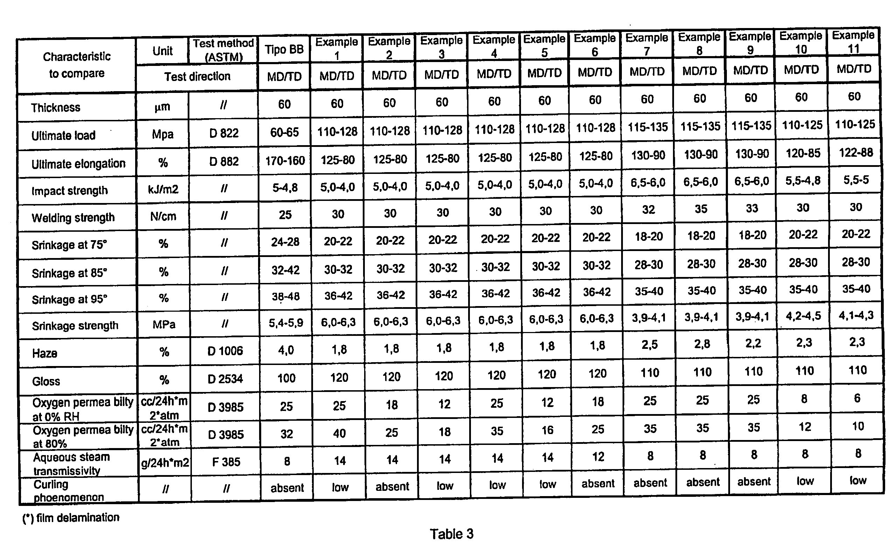

## Claims

1. Shrink film for wrapping foodstuffs, comprising seven layers (A, B, C, D, E, F and G), starting from the layer that in use is in contact with the product, composed as follows:
• layer A, thickness 10 to 30%, welding layer - constitutes the internal part of the wrapping, and can be constituted by ionomers containing zinc or sodium, a low-density polyethylene or linear low-density polyethylene (LDPE/LLDPE), or an ethylene or octene plastomer;
• layer B, thickness 5 to 15%, first adhesive layer - consists of an adhesive polymer selected from among terionomers, or copolymers of ethylene modified with maleic anhydride, or an EVA/ethylene methacrylic acid copolymer;
• layer C, thickness 10 to 20%, first barrier layer (mainly to aqueous steam) - consists of a polyamide polymer selected from among PA 6, PA 6/66, amorphous or aliphatic PA or a mixture thereof, possibly with the addition of terionomers;
• layer D, thickness 10 to 20%, second adhesive layer - consists of an adhesive polymer selected from among terionomers, or copolymers of ethylene modified with maleic anhydride, or of an EVA/ethylene methacrylic acid copolymer, and may be equal to or different from layer B;
• layer E, thickness 10 to 20%, second barrier layer (mainly to aqueous steam) - consists of a polyamide polymer selected from among PA 6, PA 6/66, amorphous or aliphatic PA or a mixture thereof, possibly with the addition of terionomers, and may be equal to or different from layer C;
• layer F, thickness 5 to 15%, third adhesive layer - consists of an adhesive polymer selected from among terionomers, or copolymers of ethylene modified with maleic anhydride, or of an EVA/ethylene methacrylic acid copolymer, and may be equal to or different from layers B and D;
• layer G, thickness 5 to 25%, outer layer and barrier layer (mainly to aqueous steam) - consists of a polyamide polymer selected from among PA 6 or PA 6/66;
wherein
• a plurality of overlaid layers are constituted by non-cross-linked thermoplastic polymers of different natures, wherein the material that constitutes one of the outer layers melts at a lower temperature than the materials that constitute the other layers;
• three layers are constituted by polymers having a Young's modulus substantially higher than that of the polymers which constitute the other layers;
• one of said three layers with a higher Young's modulus is one of the two outer layer of the film, whereas the other two layers with a higher Young's modulus are on inner layer of the film;
• each of said three layers with a higher Young's modulus is separated from the other layers with a higher Young's modulus by at least one layer with a lower Young's modulus; and
said three layers with a higher Young's modulus are highly impermeable to gases, especially oxygen and aqueous steam and are constituted by polymers of the polyamide family having modulus, of elasticity greater than 3500 MPa; said two layers with a higher Young's modulus which are situated inside the film are located on the opposite side, in relation to the neutral plane of the film, from the layer with a higher Young's modulus which lies on the outside of the film.

2. Film as claimed in claim 1, **characterised in that** the sequence of all the layers constituting said film, and their thickness, from which the distance of each of said layers from the neutral plane of said film derives, are determined in such a way that the sum of the moments exerted by said layers in relation to said neutral plane after the process of biaxial orientation is substantially nil, wherein:
• the moment exerted by a single layer in relation to the neutral plane is equal to the product of the membrane force exerted by said layer and the distance of the average plane of said layer from the neutral plane of the film;
• the membrane force exerted by said layer is equal to the product of the Young's modulus of the material which constitutes said layer, the thickness of said layer and the prevented shrinkage, expressed as a percentage.

3. Film as claimed in claims 1 and 2 **characterised in that**
• said layer A, thickness 10 to 30%, welding layer - constitutes the inner part of the wrapping, and is constituted by ionomers containing zinc or sodium;
• said layer B, thickness 5 to 10%, first adhesive layer - consists of a terionomer;
• said layer C, thickness 10 to 20%, first barrier layer (mainly to aqueous steam) - consists of a polyamide polymer selected from among polyamides PA 6/66;
• said layer D, thickness 10 to 20%, second adhesive layer - consists of an adhesive polymer selected from among the terionomers;
• said layer E, thickness 10 to 20%, second barrier layer (mainly to aqueous steam) - consists of a polyamide polymer PA 6/66;
• said layer F, thickness 5 to 15%, third adhesive layer - consists of an adhesive polymer selected from among the terionomers;
• said layer G, thickness 5 to 25%, outer layer and third barrier layer (mainly to aqueous steam) - consists of a polyamide polymer PA 6/66.

4. Film as claimed in claims 1 and 2, **characterised in that**
• said layer A, thickness 10 to 30%, welding layer - constitutes the inner part of the wrapping, and is constituted by ionomers containing zinc or sodium;
• said layer B, thickness 5 to 15%, first adhesive layer - consists of a terionomer;
• said layer C, thickness 10 to 20%, first barrier layer (mainly to aqueous steam) - consists of a mixture of polyamides PA 6/66 and aliphatic PA;
• said layer D, thickness 10 to 20%, second adhesive layer - consists of an adhesive polymer selected from among the terionomers;
• said layer E, thickness 10 to 20%, second barrier layer (mainly to aqueous steam) - consists of a polyamide polymer PA 6/66;
• said layer F, thickness 5 to 15%, third adhesive layer - consists of an adhesive polymer selected from among the terionomers;
• said layer G, thickness 5 to 25%, outer layer and third barrier layer (mainly to aqueous steam) - consists of a polyamide polymer PA 6/66.

5. Film as claimed in claims 1 and 2, **characterised in that**
• said layer A, thickness 10 to 30%, welding layer - constitutes the inner part of the wrapping, and is constituted by ionomers containing zinc or sodium;
• said layer B, thickness 5 to 15%, first adhesive layer - consists of a terionomer;
• said layer C, thickness 10 to 20%, first barrier layer (mainly to aqueous steam) - consists of a mixture of polyamides PA 6/66 + amorphous PA blended with a terionomer;
• said layer D, thickness 10 to 20%, second adhesive layer - consists of an adhesive polymer selected from among the terionomers;
• said layer E, thickness 10 to 20%, second barrier layer (mainly to aqueous steam) - consists of a polyamide polymer PA 6/66;
• layer F, thickness 5 to 15%, third adhesive layer - consists of an adhesive polymer selected from among the terionomers;
• said layer G, thickness 5 to 25%, outer layer and third barrier layer (mainly to aqueous steam) - consists of a polyamide polymer PA 6/66.

6. Film as claimed in claims 1 and 2, **characterised in that**
• said layer A, thickness 10 to 30%, welding layer - constitutes the inner part of the wrapping, and is constituted by ionomers containing zinc or sodium;
• said layer B, thickness 5 to 15%, first adhesive layer - consists of a terionomer;
• said layer C, thickness 10 to 20%, first barrier layer (mainly to aqueous steam) - consists of a polyamide polymer selected from among polyamides PA 6/66;
• said layer D, thickness 10 to 20%, second adhesive layer - consists of an adhesive polymer selected from among the terionomers;
• said layer E, thickness 10 to 20%, second barrier layer (mainly to aqueous steam) - consists of a mixture of polyamides PA 6/66 + amorphous PA;
• said layer F, thickness 5 to 15%, third adhesive layer - consists of an adhesive polymer selected from among the terionomers;
• said layer G, thickness 5 to 25%, outer layer and third barrier layer (mainly to aqueous steam) - consists of a polyamide polymer PA 6/66.

7. Film as claimed in claims 1 and 2, **characterised in that**
• said layer A, thickness 10 to 30%, welding layer - constitutes the inner part of the wrapping, and is constituted by ionomers containing zinc or sodium;
• said layer B, thickness 5 to 15%, first adhesive layer - consists of a terionomer;
• said layer C, thickness 10 to 20%, first barrier layer (mainly to aqueous steam) - consists of a polyamide polymer selected from among polyamides PA 6/66;
• said layer D, thickness 10 to 20%, second adhesive layer - consists of an adhesive polymer selected from among the terionomers;
• said layer E, thickness 10 to 20%, second barrier layer (mainly to aqueous steam) - consists of a mixture of polyamides PA 6/66 + amorphous PA blended with a terionomer;
• said layer F, thickness 5 to 15%, third adhesive layer - consists of an adhesive polymer selected from among the terionomers;
• said layer G, thickness 5 to 25%, outer layer and third barrier layer (mainly to aqueous steam) - consists of a polyamide polymer PA 6/66.

8. Film as claimed in claims 1 and 2, **characterised in that**
• said layer A, thickness 10 to 30%, welding layer - constitutes the inner part of the wrapping, and is constituted by ionomers containing zinc or sodium;
• said layer B, thickness 5 to 15%, first adhesive layer - consists of a terionomer;
• said layer C, thickness 10 to 20%, first barrier layer (mainly to aqueous steam) - consists of a polyamide polymer selected from among polyamides PA 6/66;
• said layer D, thickness 10 to 20%, second adhesive layer - consists of an adhesive polymer selected from among the terionomers;
• said layer E, thickness 10 to 20%, second barrier layer (mainly to aqueous steam) - consists of an aliphatic PA polymer;
• said layer F, thickness 5 to 15%, third adhesive layer - consists of an adhesive polymer selected from among the terionomers;
• said layer G, thickness 5 to 25%, outer layer and third barrier layer (mainly to aqueous steam) - consists of a polyamide polymer PA 6/66.

9. Film as claimed in claims 1 and 2, **characterised in that**
• said layer A, thickness 10 to 30%, welding layer - constitutes the inner part of the wrapping, and is constituted by an ethylene or octene plastomer
• said layer B, thickness 5 to 15%, first adhesive layer - consists of LLDPE modified with maleic anhydride;
• said layer C, thickness 10 to 20%, first barrier layer (mainly to aqueous steam) - consists of a mixture of polyamides PA 6/66 + amorphous PA;
• layer D, thickness 10 to 20%, second adhesive layer - consists of LLDPE modified with maleic anhydride;
• said layer E, thickness 10 to 20%, second barrier layer (mainly to aqueous steam) - consists of a polyamide polymer PA 6/66;
• said layer F, thickness 5 to 15%, third adhesive layer - consists of LLDPE modified with maleic anhydride;
• said layer G, thickness 5 to 25%, outer layer and third barrier layer (mainly to aqueous steam) - consists of a polyamide polymer PA 6/66.

10. Film as claimed in claims 1 and 2, **characterised in that**
• said layer A, thickness 10 to 30%, welding layer - constitutes the inner part of the wrapping, and is constituted by LLDPE;
• said layer B, thickness 5 to 15%, first adhesive layer - consists of LLDPE modified with maleic anhydride;
• said layer C, thickness 10 to 20%, first barrier layer (mainly to aqueous steam) - consists of a mixture of polyamides PA 6/66 + amorphous PA;
• said layer D, thickness 10 to 20%, second adhesive layer - consists of LLDPE modified with maleic anhydride;
• said layer E, thickness 10 to 20%, second barrier layer.(mainly to aqueous steam) - consists of a polyamide polymer PA 6/66;
• layer F, thickness 5 to 15%, third adhesive layer - consists of LLDPE modified with maleic anhydride;
• said layer G, thickness 5 to 25%, outer layer and third barrier layer (mainly to aqueous steam) - consists of a polyamide polymer PA 6/66.

11. Film as claimed in claims 1 and 2, **characterised in that**
• said layer A, thickness 10 to 30%, welding layer - constitutes the inner part of the wrapping, and is constituted by LDPE;
• said layer B, thickness 5 to 15%, first adhesive layer - consists of an EVA/ethylene methacrylic acid copolymer;
• said layer C, thickness 10 to 20%, first barrier layer (mainly to aqueous steam) - consists of a mixture of polyamides PA 6/66 + PA 6;
• said layer D, thickness 10 to 20%, second adhesive layer - consists of an EVA/ethylene methacrylic acid copolymer;
• said layer E, thickness 10 to 20%, second barrier layer (mainly to aqueous steam) - consists of a polyamide polymer PA 6/66;
• said layer F, thickness 5 to 15%, third adhesive layer - consists of an EVA/ethylene methacrylic acid copolymer;
• said layer G, thickness 5 to 25%, outer layer and third barrier layer (mainly to aqueous steam) - consists of a polyamide polymer PA 6/66.

12. Film as claimed in claims 1 and 2, **characterised in that**
• said layer A, thickness 20%, welding layer - constitutes the inner part of the wrapping, and can be constituted by ionomers containing zinc or sodium, a low-density polyethylene or linear low-density polyethylene (LDPE/LLDPE), or an ethylene or octene plastomer;
• said layer B, thickness 10%, first adhesive layer - consists of an adhesive polymer selected from among terionomers or copolymers of ethylene modified with maleic anhydride, or of an EVA/ethylene methacrylic acid copolymer;
• said layer C, thickness 15%, first barrier layer (mainly to aqueous steam) - consists of a polyamide polymer selected from among PA 6, PA 6/66, amorphous or aliphatic PA or a mixture thereof, possibly with the addition of terionomers;
• said layer D, thickness 15%, second adhesive layer - consists of an adhesive polymer selected from among terionomers, or copolymers of ethylene modified with maleic anhydride, or of an EVA/ethylene methacrylic acid copolymer, and may be equal to or different from layer B;
• said layer E, thickness 15%, second barrier layer (mainly to aqueous steam) - consists of a polyamide polymer selected from among PA 6, PA 6/66, amorphous or aliphatic PA or a mixture thereof, possibly with the addition of terionomers, and may be equal to or different from layer C;
• said layer F, thickness 10%, third adhesive layer - consists of an adhesive polymer selected from among terionomers or copolymers of ethylene modified with maleic anhydride, or of an EVA/ethylene methacrylic acid copolymer, and may be equal to or different from layers B and D;
• said layer G, thickness 15%, outer layer and barrier layer (mainly to aqueous steam) - consists of a polyamide polymer selected from among PA 6 and PA 6/66.

13. Film as claimed in claims 1 and 2, **characterised in that**
• said layer A, thickness 20%, welding layer - constitutes the inner part of the wrapping, and is constituted by ionomers containing zinc or sodium;
• said layer B, thickness 10%, first adhesive layer - consists of a terionomer;
• said layer C, thickness 15%, first barrier layer (mainly to aqueous steam) - consists of a polyamide polymer selected from among polyamides PA 6/66;
• said layer D, thickness 15%, second adhesive layer - consists of an adhesive polymer selected from among the terionomers;
• said layer E, thickness 15%, second barrier layer (mainly to aqueous steam) - consists of a polyamide polymer PA 6/66;
• said layer F, thickness 10%, third adhesive layer - consists of an adhesive polymer selected from among the terionomers;
• said layer G, thickness 15%, outer layer and third barrier layer (mainly to aqueous steam) - consists of a polyamide polymer PA 6/66.

14. Film as claimed in claims 1 and 2, **characterised in that**
• said layer A, thickness 20%, welding layer - constitutes the inner part of the wrapping, and is constituted by ionomers containing zinc or sodium;
• said layer B, thickness 10%, first adhesive layer - consists of a terionomer;
• said layer C, thickness 15%, first barrier layer (mainly to aqueous steam) - consists of a mixture of polyamides PA 6/66 + aliphatic PA;
• said layer D, thickness 15%, second adhesive layer - consists of an adhesive polymer selected from among the terionomers;
• said layer E, thickness 15%, second barrier layer (mainly to aqueous steam) - consists of a polyamide polymer PA 6/66;
• said layer F, thickness 10%, third adhesive layer - consists of an adhesive polymer selected from among the terionomers;
• said layer G, thickness 15%, outer layer and third barrier layer (mainly to aqueous steam) - consists of a polyamide polymer PA 6/66.

15. Film as claimed in claims 1 and 2, **characterised in that**
• said layer A, thickness 20%, welding layer - constitutes the inner part of the wrapping, and is constituted by ionomers containing zinc or sodium;
• said layer B, thickness 10%, first adhesive layer - consists of a terionomer;
• said layer C, thickness 15%, first barrier layer (mainly to aqueous steam) - consists of a mixture of polyamides PA 6/66 + amorphous PA blended with a terionomer;
• said layer D, thickness 15%, second adhesive layer - consists of an adhesive polymer selected from among the terionomers;
• said layer E, thickness 15%, second barrier layer (mainly to aqueous steam) - consists of a polyamide polymer PA 6/66;
• said layer F, thickness 10%, third adhesive layer - consists of an adhesive polymer selected from among the terionomers;
• said layer G, thickness 15%, outer layer and third barrier layer (mainly to aqueous steam) - consists of a polyamide polymer PA 6/66.

16. Film as claimed in claims 1 and 2, **characterised in that**
• said layer A, thickness 20%, welding layer - constitutes the inner part of the wrapping, and is constituted by ionomers containing zinc or sodium;
• said layer B, thickness 10%, first adhesive layer - consists of a terionomer;
• said layer C, thickness 15%, first barrier layer (mainly to aqueous steam) - consists of a polyamide polymer selected from among polyamides PA 6/66;
• said layer D, thickness 15%, second adhesive layer - consists of an adhesive polymer selected from among the terionomers;
• said layer E, thickness 15%, second barrier layer (mainly to aqueous steam) - consists of a mixture of polyamides PA 6/66 + amorphous PA;
• said layer F, thickness 10%, third adhesive layer - consists of an adhesive polymer selected from among the terionomers;
• said layer G, thickness 15%, outer layer and third barrier layer (mainly to aqueous steam) - consists of a polyamide polymer PA 6/66.

17. Film as claimed in claims 1 and 2, **characterised in that**.
• said layer A, thickness 20%, welding layer - constitutes the inner part of the wrapping, and is constituted by ionomers containing zinc or sodium;
• said layer B, thickness 10%, first adhesive layer - consists of a terionomer;
• said layer C, thickness 15%, first barrier layer (mainly to aqueous steam) - consists of a polyamide polymer selected from among polyamides PA 6/66;
• said layer D, thickness 15%, second adhesive layer - consists of an adhesive polymer selected from among the terionomers,;
• said layer E, thickness 15%, second barrier layer (mainly to aqueous steam) - consists of a mixture of polyamides PA 6/66 + amorphous PA blended with a terionomer;
• said layer F, thickness 10%, third adhesive layer - consists of an adhesive polymer selected from among the terionomers;
• said layer G, thickness 15%, outer layer and third barrier layer (mainly to aqueous steam) - consists of a polyamide polymer PA 6/66.

18. Film as claimed in claims 1 and 2, **characterised in that**
• said layer A, thickness 20%, welding layer - constitutes the inner part of the wrapping, and is constituted by ionomers containing zinc or sodium;
• said layer B, thickness 10%, first adhesive layer - consists of a terionomer;
• said layer C, thickness 15%, first barrier layer (mainly to aqueous steam) - consists of a polyamide polymer selected from among polyamides PA 6/66;
• said layer D, thickness 15%, second adhesive layer - consists of an adhesive polymer selected from among the terionomers;
• said layer E, thickness 15%, second barrier layer (mainly to aqueous steam) - consists of an aliphatic PA polymer;
• said layer F, thickness 10%, third adhesive layer - consists of an adhesive polymer selected from among the terionomers;
• said layer G, thickness 15%, outer layer and third barrier layer (mainly to aqueous steam) - consists of a polyamide polymer PA 6/66.

19. Film as claimed in claims 1 and 2, **characterised in that**
• said layer A, thickness 20%, welding layer - constitutes the inner part of the wrapping, and is constituted by an ethylene or octene plastomer;
• said layer B, thickness 10%, first adhesive layer - consists of LLDPE modified with maleic anhydride;
• said layer C, thickness 15%, first barrier layer (mainly to aqueous steam) - consists of a mixture of polyamides PA 6/66 + amorphous PA;
• said layer D, thickness 15%, second adhesive layer - consists of LLDPE modified with maleic anhydride;
• said layer E, thickness 15%, second barrier layer (mainly to aqueous steam) - consists of a polyamide polymer PA 6/66;
• said layer F, thickness 10%, third adhesive layer - consists of LLDPE modified with maleic anhydride;
• said layer G, thickness 15%, outer layer and third barrier layer (mainly to aqueous steam) - consists of a polyamide polymer PA 6/66.

20. Film as claimed in claims 1 and 2, **characterised in that**
• said layer A, thickness 20%, welding layer - constitutes the inner part of the wrapping, and is constituted by LLDPE;
• said layer B, thickness 10%, first adhesive layer - consists of LLDPE modified with maleic anhydride;
• said layer C, thickness 15%, first barrier layer (mainly to aqueous steam) - consists of a mixture of polyamides PA 6/66 + amorphous PA;
• said layer D, thickness 15%, second adhesive layer - consists of LLDPE modified with maleic anhydride;
• said layer E, thickness 15%, second barrier layer (mainly to aqueous steam) - consists of a polyamide polymer PA 6/66;
• said layer F, thickness 10%, third adhesive layer - consists of LLDPE modified with maleic anhydride;
• said layer G, thickness 15%, outer layer and third barrier layer (mainly to aqueous steam) - consists of a polyamide polymer PA 6/66.

21. Film as claimed in claims 1 and 2, **characterised in that**
• said layer A, thickness 20%, welding layer - constitutes the inner part of the wrapping, and is constituted by LDPE;
• said layer B, thickness 10%, first adhesive layer - consists of an EVA/ethylene methacrylic acid copolymer;
• said layer C, thickness 15%, first barrier layer (mainly to aqueous steam) - consists of a mixture of polyamides PA 6/66 + PA 6;
• said layer D, thickness 15%, second adhesive layer - consists of an EVA/ethylene methacrylic acid copolymer;
• said layer E, thickness 15%, second barrier layer (mainly to aqueous steam) - consists of a polyamide polymer PA 6/66;
• said layer F, thickness 10%, third adhesive layer - consists of an EVA/ethylene methacrylic acid copolymer;
• said layer G, thickness 15%, outer layer and third barrier layer (mainly to aqueous steam) - consists of a polyamide polymer PA 6/66.

## Patentansprüche

1. Schrumpffolie für Lebensmittelverpackungen mit sieben Schichten (A, B, C, D, E, F und G), beginnend mit der Schicht, die bei Gebrauch mit dem Produkt in Kontakt ist, bestehend aus Folgendem:
• Schicht A, Dicke 10 bis 30%, Schweißschicht - sie bildet die Innenseite der Verpackung und kann durch zink- oder natriumhaltige lonomere, ein Polyäthylen niedriger Dichte oder ein lineares Polyäthylen niedriger Dichte (LDPE/LLDPE) oder Äthylen oder Octene Plastomer gebildet werden;
• Schicht B, Dicke 5 bis 15%, erste Klebeschicht - sie besteht aus einem Klebepolymer, ausgewählt aus Terionomeren, oder, mit modifizierte Maleinsäureanhydrid Äthylen Copolymeren, oder einem EVA/Äthylen-Methacrylsäure-Copolymer;
• Schicht C, Dicke 10 bis 20%, erste Sperrschicht (hauptsächlich gegen Wasserdampf) - sie besteht aus einen Polyamidpolymer, ausgewählt aus PA 6, PA 6/66, amorphem oder aliphatischem PA oder aus einem Gemisch davon, möglichst unter Beigabe von Terionomeren;
• Schicht D, Dicke 10 bis 20%, zweite Klebeschicht - sie besteht aus einem Klebepolymer, ausgewählt aus Terionomeren, oder mit modifizierte Maleinsäureanhydrid Äthylen Copolymeren, oder aus EVA/Äthylen-Methacrylsäure-Copolymer und kann gleich sein mit oder verschieden sein von Schicht B;
• Schicht E, Dicke 10 bis 20%, zweite Sperrschicht (hauptsächlich gegen Wasserdampf) - sie besteht aus einem Polyamidpolymer, ausgewählt aus PA 6, PA 6/66, amorphem oder aliphatischem PA oder aus einem Gemisch davon, möglichst unter Beigabe von Terionomeren, und kann gleich sein mit oder verschieden sein von Schicht C;
• Schicht F, Dicke 5 bis 15%, dritte Klebeschicht - sie besteht aus einem Klebepolymer, ausgewählt aus Terionomeren, oder mit modifizierte Maleinsäureanhydrid Äthylen Copolymeren, oder aus einem EVA/Äthylen-Methacrylsäure-Copolymer, und kann gleich sein mit oder verschieden sein von den Schichten B und D;
• Schicht G, Dicke 5 bis 25%, Außenschicht und Sperrschicht (hauptsächlich gegen Wasserdampf) - sie besteht aus einem Polyamidpolymer, ausgewählt aus PA 6 oder PA 6/66;
wobei
• eine Mehrheit von übereinander liegenden Schichten werden aus nichtquerverbundenen Thermoplastikpolymeren verschiedener Natur gebildet, wobei das Material, das eine der Außenschichten bildet, bei einer niedrigeren Temperatur schmilzt als die Materialien, die die anderen Schichten bilden;
• drei Schichten werden durch Polymere gebildet, die ein Young-Modul besitzen, das im Wesentlichen höher ist als das der Polymere, welche die anderen Schichten bilden;
• eine der besagten drei Schichten mit einem höheren Young-Modul ist eine von den beiden Außenschichten der Folie, während die anderen beiden Schichten mit einem höheren Young Modul auf der inneren Schicht der Folie sind;
• jeder der besagten drei Schichten mit einem höheren Young-Modul ist von den anderen Schichten mit einem höheren Young-Modul durch mindestens eine Schicht mit einem niedrigeren Young-Modul getrennt; und
besagte drei Schichten mit einem höheren Young-Modul sind höchst undurchlässig gegen Gase, vornehmlich Sauerstoff und Wasserdampf, und werden von Polymeren der Polyamidfamilie gebildet, die ein Elastizitätsmodul besitzen, das größer ist als 3500 MPa; besagte zwei Schichten mit einem höheren Young-Modul, welche innerhalb der Folie liegen, befinden sich in Bezug auf die neutrale Ebene der Folie an der entgegengesetzten Seite der Schicht mit einem höheren Young-Modul, die an der Außenseite der Folie liegt.

2. Folie nach Anspruch 1, **dadurch gekennzeichnet, daß** die Sequenz aller Schichten, die besagte Folie bilden, und ihre Dicke, von der sich der Abstand jeder der besagten Schichten von der neutralen Ebene besagter Folie herleitet, so bestimmt sind, daß die Summe der Momente, die von diesen Schichten in Bezug auf besagte neutrale Ebene nach dem Prozess zweiachsiger Orientierung ausgeübt wird, im Wesentlichen gleich Null ist, wobei:
• das Moment, das von einer einzigen Schicht in Bezug auf die neutrale Ebene ausgeübt wird, ist gleich dem Produkt der Membrankraft, die von besagter Schicht ausgeübt wird, und des Abstandes zwischen der durchschnittlichen Ebene besagter Schicht und der neutralen Ebene der Folie;
• die Membrankraft, die durch besagte Schicht ausgeübt wird, ist gleich dem Produkt des Young-Moduls des Materials, das besagte Schicht bildet, der Dicke besagter Schicht und der verhinderten Schrumpfung, ausgedrückt als Prozentsatz.

3. Film nach den Ansprüchen 1 und 2, **gekennzeichnet durch** Folgendes:
• besagte Schicht A, Dicke 10 bis 30%, Schweißschicht - sie bildet die Innenseite der Verpackung und wird **durch** Ionomeren gebildet, die Zink oder Natrium enthalten;
• besagte Schicht B, Dicke 5 bis 10%, erste Klebeschicht - sie wird von einem Terionomer gebildet;
• besagte Schicht C, Dicke 10 to 20%, erste Sperrschicht (hauptsächlich gegen Wasserdampf) - sie besteht aus einem Polyamidpolymer, ausgewählt aus Polyamiden PA 6/66;
• besagte Schicht D, Dicke 10 bis 20%, zweite Klebeschicht - sie besteht aus einem Klebepolymer, ausgewählt aus den Terionomeren;
• besagte Schicht E, Dicke 10 to 20%, zweite Sperrschicht (hauptsächlich gegen Wasserdampf) - sie besteht aus einem Polyamidpolymer PA 6/66;
• besagte Schicht F, Dicke 5 bis 15%, dritte Klebeschicht - sie besteht aus einem Klebepolymer, ausgewählt aus den Terionomeren;
• besagte Schicht G, Dicke 5 bis 25%, Außenschicht und dritte Sperrschicht (hauptsächlich gegen Wasserdampf) - sie besteht aus einem Polyamidpolymer PA 6/66.

4. Folie nach den Ansprüchen 1 und 2, **gekennzeichnet durch** Folgendes:
• besagte Schicht A, Dicke 10 bis 30%, Schweißschicht - sie bildet die Innenseite der Verpackung und wird **durch** lonomere gebildet, die Zink oder Natrium enthalten;
• besagte Schicht B, Dicke 5 bis 15%, erste Klebeschicht - sie besteht aus einem Terionomer;
• besagte Schicht C, Dicke 10 bis 20%, erste Sperrschicht (hauptsächlich gegen Wasserdampf) - sie besteht aus einem Gemisch von Polyamiden PA 6/66 und aliphatischem PA;
• besagte Schicht D, Dicke 10 bis 20%, zweite Klebeschicht - sie besteht aus einem Klebepolymer, ausgewählt aus den Terionomeren;
• besagte Schicht E, Dicke 10 bis 20%, zweite Sperrschicht (hauptsächlich gegen Wasserdampf) - sie besteht aus einem Polyamidpolymer PA 6/66;
• besagte Schicht F, Dicke 5 bis 15%, dritte Klebeschicht - sie besteht aus einem Klebepolymer, ausgewählt aus den Terionomeren;
• besagte Schicht G, Dicke 5 bis 25%, Außenschicht und dritte Sperrschicht (hauptsächlich gegen Wasserdampf) - sie besteht aus einem Polyamidpolymer PA 6/66.

5. Folie nach den Ansprüchen 1 und 2, **gekennzeichnet durch** Folgendes:
• besagte Schicht A, Dicke 10 bis 30%, Schweißschicht - sie bildet die Innenseite der Verpackung und wird von lonomeren gebildet, die Zink oder Natrium enthalten;
• besagte Schicht B, Dicke 5 bis 15%, erste Klebeschicht - sie besteht aus einem Terionomer;
• besagte Schicht C, Dicke 10 bis 20%, erste Sperrschicht (hauptsächlich gegen Wasserdampf) - sie besteht aus einem Gemisch von Polyamiden PA 6/66 und amorphem PA, vermischt mit einem Terionomer;
• besagte Schicht D, Dicke 10 bis 20%, zweite Klebeschicht - sie besteht aus einem Klebepolymer, ausgewählt aus den Terionomeren;
• besagte Schicht E, Dicke 10 bis 20%, zweite Sperrschicht (hauptsächlich gegen Wasserdampf) - sie besteht aus einem Polyamidpolymer PA 6/66;
• Schicht F, Dicke 5 bis 15%, dritte Klebeschicht - sie besteht aus einem Klebepolymer, ausgewählt aus den Terionomeren;
• besagte Schicht G, Dicke 5 bis 25%, Außenschicht und dritte Sperrschicht (hauptsächlich gegen Wasserdampf) - sie besteht aus einem Polyamidpolymer PA 6/66.

6. Folie nach den Ansprüchen 1 und 2, **gekennzeichnet durch** Folgendes:
• besagte Schicht A, Dicke 10 bis 30%, Schweißschicht - sie bildet die Innenseite der Verpackung und wird von lonomeren gebildet, die Zink oder Natrium enthalten;
• besagte Schicht B, Dicke 5 bis 15%, erste Klebeschicht - sie besteht aus einem Terionomer;
• besagte Schicht C, Dicke 10 bis 20%, erste Sperrschicht (hauptsächlich gegen Wasserdampf) - sie besteht aus einem Polyamidpolymer, ausgewählt aus Polyamiden PA 6/66;
• besagte Schicht D, Dicke 10 bis 20%, zweite Klebeschicht - sie besteht aus einem Klebepolymer, ausgewählt aus den Terionomeren;
• besagte Schicht E, Dicke 10 bis 20%, zweite Sperrschicht (hauptsächlich gegen Wasserdampf) - sie besteht aus einem Gemisch von Polyamiden. PA 6/66 + amorphem PA;
• besagte Schicht F, Dicke 5 bis 15%, dritte Klebeschicht - sie besteht aus einem Klebepolymer, ausgewählt aus den Terionomeren;
• besagte Schicht G, Dicke 5 bis 25%, Außenschicht und dritte Sperrschicht (hauptsächlich gegen Wasserdampf) - sie besteht aus einem Polyamidpolymer PA 6/66.

7. Folie nach den Ansprüchen 1 und 2, **gekennzeichnet durch** Folgendes:
• besagte Schicht A, Dicke 10 bis 30%, Schweißschicht - sie bildet die Innenseite der Verpackung und wird **durch** lonomere gebildet, die Zink oder Natrium enthalten;
• besagte Schicht B, Dicke 5 bis 15%, erste Klebeschicht - sie besteht aus einem Terionomer;
• besagte Schicht C, Dicke 10 bis 20%, erste Sperrschicht (hauptsächlich gegen Wasserdampf) - sie besteht aus einem Polyamidpolymer, ausgewählt aus Polyamiden PA 6/66;
• besagte Schicht D, Dicke 10 bis 20%, zweite Klebeschicht - sie besteht aus einem Klebepolymer, ausgewählt aus den Terionomeren;
• besagte Schicht E, Dicke 10 bis 20%, zweite Sperrschicht (hauptsächlich gegen Wasserdampf) - sie besteht aus einem Gemisch von Polyamiden PA 6/66 + amorphem PA, vermischt mit einem Terionomer;
• besagte Schicht F, Dicke 5 bis 15%, dritte Klebeschicht - sie besteht aus einem Klebepolymer, ausgewählt aus den Terionomeren;
• besagte Schicht G, Dicke 5 bis 25%, Außenschicht und dritte Sperrschicht (hauptsächlich gegen Wasserdampf) - sie besteht aus einem Polyamidpolymer PA 6/66.

8. Folie nach den Ansprüchen 1 und 2, **gekennzeichnet durch** Folgendes:
• besagte Schicht A, Dicke 10 bis 30%, Schweißschicht - sie bildet die Innenseite der Verpackung und wird **durch** lonomere gebildet, die Zink oder Natrium enthalten;
• besagte Schicht B, Dicke 5 bis 15%, erste Klebeschicht - sie besteht aus einem Terionomer;
• besagte Schicht C, Dicke 10 bis 20%, erste Sperrschicht (hauptsächlich gegen Wasserdampf) - sie besteht aus einem Polyamidpolymer, ausgewählt aus Polyamiden PA 6/66;
• besagte Schicht D, Dicke 10 bis 20%, zweite Klebeschicht - sie besteht aus einem Klebepolymer, ausgewählt aus den Terionomeren;
• besagte Schicht E, Dicke 10 bis 20%, zweite Sperrschicht (hauptsächlich gegen Wasserdampf) - sie besteht aus einem aliphatischen PA Polymer;
• besagte Schicht F, Dicke 5 bis 15%, dritte Klebeschicht - sie besteht aus einem Klebepolymer, ausgewählt aus den Terionomeren;
• besagte Schicht G, Dicke 5 bis 25%, Außenschicht und dritte Sperrschicht (hauptsächlich gegen Wasserdampf) - sie besteht aus einem Polyamidpolymer PA 6/66.

9. Folie nach den Ansprüchen 1 und 2, **gekennzeichnet durch** Folgendes:
• besagte Schicht A, Dicke 10 bis 30%, Schweißschicht - sie bildet die Innenseite der Verpackung und wird **durch** ein Äthylen oder Octene Plastomer gebildet;
• besagte Schicht B, Dicke 5 bis 15%, erste Klebeschicht - sie besteht aus LLDPE, modifiziert mit Maleinsäureanhydrid;
• besagte Schicht C, Dicke 10 bis 20%, erste Sperrschicht (hauptsächlich gegen Wasserdampf) - sie besteht aus einem Gemisch von Polyamiden PA 6/66 + amorphem PA;
• Schicht D, Dicke 10 bis 20%, zweite Klebeschicht - sie besteht aus LLDPE, modifiziert mit Maleinsäureanhydrid;
• besagte Schicht E, Dicke 10 bis 20%, zweite Sperrschicht (hauptsächlich gegen Wasserdampf) - sie besteht aus einem Polyamidpolymer PA 6/66;
• besagte Schicht F, Dicke 5 bis 15%, dritte Klebeschicht - sie besteht aus LLDPE, modifiziert mit Maleinsäureanhydrid;
• besagte Schicht G, Dicke 5 to 25%, Außenschicht und dritte Sperrschicht (hauptsächlich gegen Wasserdampf) - sie besteht aus einem Polyamidpolymer PA 6/66.

10. Folie nach den Ansprüchen 1 und 2, **gekennzeichnet durch** Folgendes:
• besagte Schicht A, Dicke 10 bis 30%, Schweißschicht - sie bildet die Innenseite der Verpackung und wird **durch** LLDPE gebildet;
• besagte Schicht B, Dicke 5 bis 15%, erste Klebeschicht - sie besteht aus LLDPE, modifiziert mit Maleinsäureanhydrid;
• besagte Schicht C, Dicke 10 bis 20%, erste Sperrschicht (hauptsächlich gegen Wasserdampf) - sie besteht aus einem Gemisch von Polyamiden PA 6/66 + amorphem PA;
• besagte Schicht D, Dicke 10 bis 20%, zweite Klebeschicht - sie besteht aus LLDPE, modifiziert mit Maleinsäureanhydrid;
• besagte Schicht E, Dicke 10 bis 20%, zweite Sperrschicht (hauptsächlich gegen Wasserdampf) - sie besteht aus einem Polyamidpolymer PA 6/66;
• Schicht F, Dicke 5 bis 15%, dritte Klebeschicht - sie besteht aus LLDPE, modifiziert mit Maleinsäureanhydrid;
• besagte Schicht G, Dicke 5 bis 25%, Außenschicht und dritte Sperrschicht (hauptsächlich gegen Wasserdampf) - sie besteht aus einem Polyamidpolymer PA 6/66.

11. Folie nach den Ansprüchen 1 und 2, **gekennzeichnet durch** Folgendes:
• besagte Schicht A, Dicke 10 bis 30%, Schweißschicht - sie bildet die Innenseite der Verpackung und wird **durch** LDPE gebildet;
• besagte Schicht B, Dicke 5 bis 15%, erste Klebeschicht - sie besteht aus einem EVA/Äthylen-Methacrylsäure-Copolymer;
• besagte Schicht C, Dicke 10 bis 20%, erste Sperrschicht (hauptsächlich gegen Wasserdampf) - sie besteht aus einem Gemisch von Polyamiden PA 6/66 + PA 6;
• besagte Schicht D, Dicke 10 bis 20%, zweite Klebeschicht - sie besteht aus einem EVA/Äthylen-Methacrylsäure-Copolymer;
• besagte Schicht E, Dicke 10 bis 20%, zweite Sperrschicht (hauptsächlich gegen Wasserdampf) - sie besteht aus einem Polyamidpolymer PA 6/66;
• besagte Schicht F, Dicke 5 bis 15%, dritte Klebeschicht - sie besteht aus einem EVA/Äthylen-Methacrylsäure-Copolymer;
• besagte Schicht G, Dicke 5 bis 25%, Außenschicht und dritte Sperrschicht (hauptsächlich gegen Wasserdampf) - sie besteht aus einem Polyamidpolymer PA 6/66.

12. Folie nach den Ansprüchen 1 und 2, **gekennzeichnet durch** Folgendes:
• besagte Schicht A, Dicke 20%, Schweißschicht - sie bildet die Innenseite der Verpackung und kann **durch** zink- oder natriumhaltige lonomere, ein Polyäthylen niedriger Dichte oder lineares Polyäthylen niedriger Dichte (LDPE/LLDPE), oder ein Äthylen oder Octene Plastomer gebildet werden;
• besagte Schicht B, Dicke 10%, erste Klebeschicht - sie besteht aus einem Klebepolymer, ausgewählt aus Terionomeren oder mit modifizierte Maleinsäureanhydrid Äthylen Copolymeren, oder aus einem EVA/Äthylen-Methacrylsäure-Copolymer;
• besagte Schicht C, Dicke 15%, erste Sperrschicht (hauptsächlich gegen Wasserdampf) - sie besteht aus einem Polyamidpolymer, ausgewählt aus PA 6, PA 6/66, amorphem oder aliphatischem PA oder einem Gemisch davon, möglichst unter Beigabe von Terionomeren;
• besagte Schicht D, Dicke 15%, zweite Klebeschicht - sie besteht aus einem Klebepolymer, ausgewählt aus Terionomeren oder mit modifizierte Maleinsäureanhydrid Äthylen Copolymeren, oder aus einem EVA/Äthylen-Methacrylsäure-Copolymer, und kann gleich sein mit oder verschieden sein von Schicht B;
• besagte Schicht E, Dicke 15%, zweite Sperrschicht (hauptsächlich gegen Wasserdampf) - sie besteht aus einem Polyamidpolymer, ausgewählt aus PA 6, PA 6/66, amorphem oder aliphatischem PA oder einem Gemisch davon, möglichst unter Beigabe von Terionomeren, und kann gleich sein mit oder verschieden sein von Schicht C;
• besagte Schicht F, Dicke 10%, dritte Klebeschicht - sie besteht aus einem Klebepolymer, ausgewählt aus Terionomeren, oder mit modifizierte Maleinsäureanhydrid Äthylen Copolymeren, oder aus einem EVA/Äthylen-Methacrylsäure-Copolymer, und kann gleich sein mit oder verschieden sein von den Schichten B und D;
• besagte Schicht G, Dicke 15%, Außenschicht und Sperrschicht (hauptsächlich gegen Wasserdampf) - sie besteht aus einem Polyamidpolymer, ausgewählt aus PA 6 und PA 6/66.

13. Folie nach den Ansprüchen 1 und 2, **gekennzeichnet durch** Folgendes:
• besagte Schicht A, Dicke 20%, Schweißschicht - sie bildet die Innenseite der Verpackung und wird von lonomeren gebildet, die Zink oder Natrium enthalten;
• besagte Schicht B, Dicke 10%, erste Klebeschicht - sie besteht aus einem Terionomer;
• besagte Schicht C, Dicke 15%, erste Sperrschicht (hauptsächlich gegen Wasserdampf) - sie besteht aus einem Polyamidpolymer, ausgewählt aus Polyamiden PA 6/66;
• besagte Schicht D, Dicke 15%, zweite Klebeschicht - sie besteht aus einem Klebepolymer, ausgewählt aus den Terionomeren;
• besagte Schicht E, Dicke 15%, zweite Sperrschicht (hauptsächlich gegen Wasserdampf) - sie besteht aus einem Polyamidpolymer PA 6/66;
• besagte Schicht F, Dicke 10%, dritte Klebeschicht - sie besteht aus einem Klebepolymer, ausgewählt aus den Terionomeren;
• besagte Schicht G, Dicke 15%, Außenschicht und dritte Sperrschicht (hauptsächlich gegen Wasserdampf) - sie besteht aus einem Polyamidpolymer PA 6/66.

14. Folie nach den Ansprüchen 1 und 2, **gekennzeichnet durch** Folgendes:
• besagte Schicht A, Dicke 20%, Schweißschicht - sie bildet die Innenseite der Verpackung und wird von lonomeren gebildet, die Zink oder Natrium enthalten;
• besagte Schicht B, Dicke 10%, erste Klebeschicht - sie besteht aus einem Terionomer;
• besagte Schicht C, Dicke 15%, erste Sperrschicht (hauptsächlich gegen Wasserdampf) - sie besteht aus einem Gemisch von Polyamiden PA 6/66 + aliphatischem PA;
• besagte Schicht D, Dicke 15%, zweite Klebeschicht - sie besteht aus einem Klebepolymer, ausgewählt aus den Terionomeren;
• besagte Schicht E, Dicke 15%, zweite Sperrschicht (hauptsächlich gegen Wasserdampf) - sie besteht aus einem Polyamidpolymer PA 6/66;
• besagte Schicht F, Dicke 10%, dritte Klebeschicht - sie besteht aus einem Klebepolymer, ausgewählt aus den Terionomeren;
• besagte Schicht G, Dicke 15%, Außenschicht und dritte Sperrschicht (hauptsächlich gegen Wasserdampf) - sie besteht aus einem Polyamidpolymer PA 6/66.

15. Folie nach den Ansprüchen 1 und 2, **gekennzeichnet durch** Folgendes:
• besagte Schicht A, Dicke 20%, Schweißschicht - sie bildet die Innenseite der Verpackung und wird von lonomeren gebildet, die Zink oder Natrium enthalten;
• besagte Schicht B, Dicke 10%, erste Klebeschicht - sie besteht aus einem Terionomer;
• besagte Schicht C, Dicke 15%, erste Sperrschicht (hauptsächlich gegen Wasserdampf) - sie besteht aus einem Gemisch von Polyamiden PA 6/66 + amorphem PA, vermischt mit einem Terionomer;
• besagte Schicht D, Dicke 15%, zweite Klebeschicht - sie besteht aus einem Klebepolymer, ausgewählt aus den Terionomeren;
• besagte Schicht E, Dicke 15%, zweite Sperrschicht (hauptsächlich gegen Wasserdampf) - sie besteht aus einem Polyamidpolymer PA 6/66;
• besagte Schicht F, Dicke 10%, dritte Klebeschicht - sie besteht aus einem Klebepolymer, ausgewählt aus den Terionomeren;
• besagte Schicht G, Dicke 15%, Außenschicht und dritte Sperrschicht (hauptsächlich gegen Wasserdampf) - sie besteht aus einem Polyamidpolymer PA 6/66.

16. Folie nach den Ansprüchen 1 und 2, **gekennzeichnet durch** Folgendes:
• besagte Schicht A, Dicke 20%, Schweißschicht - sie bildet die Innenseite der Verpackung und wird von lonomeren gebildet, die Zink oder Natrium enthalten;
• besagte Schicht B, Dicke 10%, erste Klebeschicht - sie besteht aus einem Terionomer;
• besagte Schicht C, Dicke 15%, erste Sperrschicht (hauptsächlich gegen Wasserdampf) - sie besteht aus einem Polyamidpolymer, ausgewählt aus Polyamiden PA 6/66;
• besagte Schicht D, Dicke 15%, zweite Klebeschicht - sie besteht aus einem Klebepolymer, ausgewählt aus den Terionomeren;
• besagte Schicht E, Dicke 15%, zweite Sperrschicht (hauptsächlich gegen Wasserdampf) - sie besteht aus einem Gemisch von Polyamiden PA 6/66 + amorphem PA;
• besagte Schicht F, Dicke 10%, dritte Klebeschicht - sie besteht aus einem Klebepolymer, ausgewählt aus den Terionomeren;
• besagte Schicht G, Dicke 15%, Außenschicht und dritte Sperrschicht (hauptsächlich gegen Wasserdampf) - sie besteht aus einem Polyamidpolymer PA 6/66.

17. Folie nach den Ansprüchen 1 und 2, **gekennzeichnet durch** Folgendes
• besagte Schicht A, Dicke 20%, Schweißschicht - sie bildet die Innenseite der Verpackung und wird von lonomeren gebildet, die Zink oder Natrium enthalten;
• besagte Schicht B, Dicke 10%, erste Klebeschicht - sie besteht aus einem Terionomer;
• besagte Schicht C, Dicke 15%, erste Sperrschicht (hauptsächlich gegen Wasserdampf) - sie besteht aus einem Polyamidpolymer, ausgewählt aus Polyamiden PA 6/66;
• besagte Schicht D, Dicke 15%, zweite Klebeschicht - sie besteht aus einem Klebepolymer, ausgewählt aus den Terionomeren;
• besagte Schicht E, Dicke 15%, zweite Sperrschicht (hauptsächlich gegen Wasserdampf) - sie besteht aus einem Gemisch von Polyamiden PA 6/66 + amorphem PA, vermischt mit einem Terionomer;
• besagte Schicht F, Dicke 10%, dritte Klebeschicht - sie besteht aus einem Klebepolymer, ausgewählt aus den Terionomeren;
• besagte Schicht G, Dicke 15%, Außenschicht und dritte Sperrschicht (hauptsächlich gegen Wasserdampf) - sie besteht aus einem Polyamidpolymer PA 6/66.

18. Folie nach den Ansprüchen 1 und 2, **gekennzeichnet durch** Folgendes:
• besagte Schicht A, Dicke 20%, Schweißschicht - sie bildet die Innenseite der Verpackung und wird von lonomeren gebildet, die Zink oder Natrium enthalten;
• besagte Schicht B, Dicke 10%, erste Klebeschicht - sie besteht aus einem Terionomer;
• besagte Schicht C, Dicke 15%, erste Sperrschicht (hauptsächlich gegen Wasserdampf) - sie besteht aus einem Polyamidpolymer, ausgewählt aus Polyamiden PA 6/66;
• besagte Schicht D, Dicke 15%, zweite Klebeschicht - sie besteht aus einem Klebepolymer, ausgewählt aus den Terionomeren;
• besagte Schicht E, Dicke 15%, zweite Sperrschicht (hauptsächlich gegen Wasserdampf) - sie besteht aus einem aliphatischen PA Polymer;
• besagte Schicht F, Dicke 10%, dritte Klebeschicht - sie besteht aus einem Klebepolymer, ausgewählt aus den Terionomeren;
• besagte Schicht G, Dicke 15%, Außenschicht und dritte Sperrschicht (hauptsächlich gegen Wasserdampf) - sie besteht aus einem Polyamidpolymer PA 6/66.

19. Folie nach den Ansprüchen 1 und 2, **gekennzeichnet durch** Folgendes:
• besagte Schicht A, Dicke 20%, Schweißschicht - sie bildet die Innenseite der Verpackung und wird **durch** ein Äthylen oder Octene Plastomer gebildet;
• besagte Schicht B, Dicke 10%, erste Klebeschicht - sie besteht aus LLDPE, modifiziert mit Maleinsäureanhydrid;
• besagte Schicht C, Dicke 15%, erste Sperrschicht (hauptsächlich gegen Wasserdampf) - sie besteht aus einem Gemisch von Polyamiden PA 6/66 + amorphem PA;
• besagte Schicht D, Dicke 15%, zweite Klebeschicht - sie besteht aus LLDPE, modifiziert mit Maleinsäureanhydrid;
• besagte Schicht E, Dicke 15%, zweite Sperrschicht (hauptsächlich gegen Wasserdampf) - sie besteht aus einem Polyamidpolymer PA 6/66;
• besagte Schicht F, Dicke 10%, dritte Klebeschicht - sie besteht aus LLDPE, modifiziert mit Maleinsäureanhydrid;
• besagte Schicht G, Dicke 15%, Außenschicht und dritte Sperrschicht (hauptsächlich gegen Wasserdampf) - sie besteht aus einem Polyamidpolymer PA 6/66.

20. Folie nach den Ansprüchen 1 und 2, **gekennzeichnet durch** Folgendes:
• besagte Schicht A, Dicke 20%, Schweißschicht - sie bildet die Innenseite der Verpackung und wird von LLDPE gebildet;
• besagte Schicht B, Dicke 10%, erste Klebeschicht - sie besteht aus LLDPE, modifiziert mit Maleinsäureanhydrid;
• besagte Schicht C, Dicke 15%, erste Sperrschicht (hauptsächlich gegen Wasserdampf) - sie besteht aus einem Gemisch von Polyamiden PA 6/66 + amorphem PA;
• besagte Schicht D, Dicke 15%, zweite Klebeschicht - sie besteht aus LLDPE, modifiziert mit Maleinsäureanhydrid;
• besagte Schicht E, Dicke 15%, zweite Sperrschicht (hauptsächlich gegen Wasserdampf) - sie besteht aus einem Polyamidpolymer PA 6/66;
• besagte Schicht F, Dicke 10%, dritte Klebeschicht - sie besteht aus LLDPE, modifiziert mit Maleinsäureanhydrid;
• besagte Schicht G, Dicke 15%, Außenschicht und dritte Sperrschicht (hauptsächlich gegen Wasserdampf) - sie besteht aus einem Polyamidpolymer PA 6/66.

21. Folie nach den Ansprüchen 1 und 2, **gekennzeichnet durch** Folgendes:
• besagte Schicht A, Dicke 20%, Schweißschicht - sie bildet die Innenseite der Verpackung und wird von LDPE gebildet;
• besagte Schicht B, Dicke 10%, erste Klebeschicht - sie besteht aus einem EVA/Äthylen-Methacrylicsäure-Copolymer;
• besagte Schicht C, Dicke 15%, erste Sperrschicht (hauptsächlich gegen Wasserdampf) - sie besteht aus einem Gemisch von Polyamiden PA 6/66 + PA 6;
• besagte Schicht D, Dicke
• 15%, zweite Klebeschicht - sie besteht aus einem EVA/Äthylen-Methacrylsäure-Copolymer;
• besagte Schicht E, Dicke 15%, zweite Sperrschicht (hauptsächlich gegen Wasserdampf) - sie besteht aus einem Polyamidpolymer PA 6/66;
• besagte Schicht F, Dicke 10%, dritte Klebeschicht - sie besteht aus einem EVA/Äthylen-Methacrylsäure-Copolymer;
• besagte Schicht G, Dicke 15%, Außenschicht und dritte Sperrschicht (hauptsächlich gegen Wasserdampf) - sie besteht aus einem Polyamidpolymer PA 6/66.

## Revendications

1. Film rétractable pour emballage alimentaire formé de sept couches (A, B, C, D, E, F et G), à commencer par la couche qui, en phase d'utilisation, est en contact avec le produit, constitué comme suit :
• couche A, 10 à 30% de l'épaisseur, couche de soudage - constitue la partie interne de l'emballage et peut être formée de ionomères contenant du zinc ou du sodium, d'un polyéthylène à faible densité ou d'un polyéthylène à faible densité linéaire (LDPE/LLDPE) ou d'un plastomère à base d'éthylène ou d'octène ;
• couche B, 5 à 15% de l'épaisseur, première couche adhésive - consiste en un polymère adhésif sélectionné parmi les térionomères, ou copolymères d'éthylène modifiés avec de l'anhydride maléique ou un copolymère d'acide méthacrylique EVA/éthylène ;
• couche C, 10 à 20% de l'épaisseur, première couche barrière (surtout contre la vapeur d'eau) - consiste en un polymère polyamide sélectionné parmi PA 6, PA 6/66, PA amorphe ou aliphatique ou un mélange de ceux-ci, avec rajout de térionomères si possible ;
• couche D, 10 à 20% de l'épaisseur, deuxième couche adhésive - consiste en un polymère adhésif sélectionné parmi des térionomères ou copolymères d'éthylène modifiés avec de l'anhydride maléique ou un copolymère d'acide méthacrylique EVA/éthylène, pouvant être identique ou différent de la couche B ;
• couche E, 10 à 20% de l'épaisseur, deuxième couche barrière (surtout à la vapeur d'eau) - consiste en un polymère polyamide sélectionné parmi PA 6, PA 6/66, PA amorphe ou aliphatique ou un mélange de ces derniers, avec rajout de térionomères si possible, pouvant être identique ou différente de la couche C ;
• couche F, 5 à 15% de l'épaisseur, troisième couche adhésive - consiste en un polymère adhésif sélectionné parmi des térionomères ou copolymères d'éthylène modifiés avec de l'anhydride maléique, ou un copolymère d'acide méthacrylique EVAléthylène, pouvant être identique ou différente des couches B et D ;
• couche G, 5 à 25% de l'épaisseur, couche externe et couche barrière (surtout contre la vapeur d'eau) - consiste en un polymère polyamide sélectionné parmi PA 6 ou PA 6/66;
où
• plusieurs couches superposées sont constituées de polymères thermoplastiques non croisés de différentes natures, où le matériau qui constitue une des couches externes fond à une température inférieure à la température de fusion des autres couches;
• trois couches sont constituées de polymères ayant un module de Young essentiellement plus élevé que celui des polymères qui constituent les autres couches;
• une desdites trois couches à module de Young plus élevé est une des deux couches externes du film, alors que les deux autres couches dont le module de Young est plus élevé se situent à l'intérieur d'une des couches internes du film ;
• chacune desdites trois couches à module de Young plus élevé est séparée des autres couches à module de Young plus élevé par au moins une couche à module de Young plus faible et lesdites trois couches à module de Young plus élevé sont fortement imperméables aux gaz, en particulier à l'oxygène et à la vapeur d'eau, et sont constituées de polymères de la famille des polyamides dont le module d'élasticité est supérieur à 3500 MPa ; lesdites deux couches présentant un module de Young plus élevé situées à l'intérieur du film se trouvent à l'opposé, par rapport à la couche plane neutre du film, de la couche présentant un module de Young plus élevé qui se trouve sur l'extérieur du film.

2. Le film, tel que revendiqué à la revendication 1, **caractérisé en ce que** la succession de toutes les couches constituant ledit film, et leur épaisseur, d'où dérive la distance de chacune desdites couches du plan neutre dudit film, sont déterminées de façon que la somme des moments exercés par lesdites couches par rapport audit plan neutre du film au terme de la procédure d'orientation biaxiale est pratiquement nulle, où :
• Le moment exercé par une couche par rapport au plan neutre est égal au produit de la force de la membrane exercée par ladite couche par la distance du plan moyen de ladite couche du plan neutre du film ;
• la force de la membrane exercée par ladite couche est égale au produit du module de Young du matériau qui constitue ladite couche par l'épaisseur de ladite couche et le rétrécissement prévu, exprimé en pourcentage.

3. Le film tel que revendiqué à les revendications 1 et 2, **caractérisé en ce que**
• ladite couche A, 10 à 30% de l'épaisseur, couche de soudage - constitue la partie interne de l'emballage, et elle est formée de ionomères contenant du zinc ou du sodium ;
• ladite couche B, 5 à 10% de l'épaisseur, première couche adhésive - consiste en un térionomère;
• ladite couche C, 10 à 20% de l'épaisseur, première couche barrière (surtout contre la vapeur d'eau) - consiste en un polymère polyamide sélectionné parmi les polyamides PA 6/66;
• ladite couche D, 10 à 20% de l'épaisseur, deuxième couche adhésive- consiste en un polymère adhésif sélectionné parmi les térionomères;
• ladite couche E, 10 à 20% de l'épaisseur, deuxième couche barrière (surtout contre la vapeur d'eau) - consiste en un polymère polyamide PA 6/66;
• ladite couche F, 5 à 15% de l'épaisseur, troisième couche adhésive - consiste en un polymère adhésif sélectionné parmi les térionomères ;
• ladite couche G, 5 à 25% de l'épaisseur, couche externe et troisième couche barrière (surtout contre la vapeur d'eau) - consiste en un polymère polyamide PA 6/66.

4. Le film, tel que revendiqué à les revendications 1 et 2, **caractérisé en ce que**
• ladite couche A, 10 à 30% de l'épaisseur, couche de soudage - constitue la partie interne de l'emballage, et elle est formée de ionomères contenant du zinc ou du sodium ;
• ladite couche B, 5 à 15% de l'épaisseur, première couche adhésive - consiste en un térionomère;
• ladite couche C, 10 à 20% de l'épaisseur, première couche barrière (surtout contré la vapeur d'eau) - consiste en un mélange de polyamides PA 6/66 et PA aliphatique ;
• ladite couche D, 10 à 20% de l'épaisseur, deuxième couche adhésive - consiste en un polymère adhésif sélectionné parmi les térionomères;
• ladite couche E, 10 à 20% de l'épaisseur, deuxième couche barrière (surtout contre la vapeur d'eau) - consiste en un polymère polyamide PA 6/66;
• ladite couche F, 5 à 15% de l'épaisseur, troisième couche adhésive - consiste en un polymère adhésif sélectionné parmi les térionomères;
• ladite couche G, 5 à 25% de l'épaisseur, couche externe et troisième couche barrière (surtout contre la vapeur d'eau) - consiste en un polymère polyamide PA 6/66.

5. Le film, tel que revendiqué à les revendications 1 et 2, **caractérisé en ce que**
• ladite couche A, 10 à 30% de l'épaisseur, couche de soudage - constitue la partie interne de l'emballage et elle est formée de ionomères contenant du zinc ou du sodium ;
• Ladite couche B, 5 à 15% de l'épaisseur, première couche adhésive - consiste en un térionomère;
• ladite couche C, 10 à 20% de l'épaisseur, première couche barrière (surtout contre la vapeur d'eau) - consiste en un mélange de polyamides PA 6/66 + PA amorphe mélangé à un térionomère;
• ladite couche D, 10 à 20% de l'épaisseur, deuxième couche adhésive - consiste en un polymère adhésif sélectionné parmi les térionomères;
• ladite couche E, 10 à 20% de l'épaisseur, deuxième couche barrière (surtout contre la vapeur d'eau) - consiste en un polymère polyamide PA 6/66;
• ladite couche F, 5 à 15% de l'épaisseur, troisième couche adhésive - consiste en un polymère adhésif sélectionné parmi les térionomères;
• ladite couche G, 5 à 25 % de l'épaisseur, couche externe et troisième couche barrière (surtout contre la vapeur d'eau) - consiste en un polymère polyamide PA 6/66.

6. Le film, tel que revendiqué à les revendications 1 et 2, **caractérisé en ce que**
• ladite couche A, 10 à 30% de l'épaisseur, couche de soudage - constitue la partie interne de l'emballage et elle est formée de ionomères contenant du zinc ou du sodium ;
• ladite couche B, 5 à 15% de l'épaisseur, première couche adhésive - consiste en un térionomère;
• ladite couche C, 10 à 20% de l'épaisseur, première couche barrière (surtout contre la vapeur d'eau) - consiste en un polymère polyamide sélectionné parmi les polyamides PA 6/66;
• ladite couche D, 10 à 20% de l'épaisseur, deuxième couche adhésive - consiste en un polymère adhésif sélectionné parmi les térionomères;
• ladite couche E, 10 à 20% de l'épaisseur, deuxième couche barrière (surtout contre la vapeur d'eau) - consiste en un mélange de polyamides PA 6/66 + PA amorphe;
• ladite couche F, 5 à 15% de l'épaisseur , troisième couche adhésive - consiste en un polymère adhésif sélectionné parmi les térionomères;
• Ladite couche G, 5 à 25% de l'épaisseur , couche externe et troisième couche barrière (surtout contre la vapeur d'eau) - consiste en un polymère polyamide PA 6/66.

7. Le film, tel que revendiqué à les revendications 1 et 2, **caractérisé en ce que**
• ladite couche A, 10 à 30% de l'épaisseur, couche de soudage - constitue la partie interne de l'emballage et elle est formée de ionomères contenant du zinc ou du sodium ;
• ladite couche B, 5 à 15% de l'épaisseur, première couche adhésive - consiste en un térionomère;
• ladite couche C, 10 à 20% de l'épaisseur, première couche barrière (surtout contre la vapeur d'eau) - consiste en un polymère polyamide sélectionné parmi les polyamides PA 6/66;
• ladite couche D, 10 à 20% de l'épaisseur, deuxième couche adhésive - consiste en un polymère adhésif sélectionné parmi les térionomères;
• ladite couche E, 10 à 20% de l'épaisseur, deuxième couche barrière (surtout contre la vapeur d'eau) - consiste en un mélange de polyamides PA 6/66 + PA amorphe mélangé à un térionomère;
• ladite couche F, 5 à 15% de l'épaisseur, troisième couche adhésive - consiste en un polymère adhésif sélectionné parmi les térionomères;
• ladite couche G, 5 à 25% de l'épaisseur, couche externe et troisième couche barrière (surtout contre la vapeur d'eau) - consiste en un polymère polyamide PA 6/66.

8. Le film, tel que revendiqué à les revendications 1 et 2, **caractérisé en ce que**:
• ladite couche A, 10 à 30% de l'épaisseur, couche de soudage - constitue la partie interne de l'emballage et elle est formée de ionomères contenant du zinc ou du sodium ;
• ladite couche B, 5 à 15% de l'épaisseur, première couche adhésive- consiste en un térionomère;
• ladite couche C, 10 à 20% de l'épaisseur, première couche barrière (surtout contre la vapeur d'eau) - consiste en un polymère polyamide sélectionné parmi les polyamides PA 6/66;
• ladite couche D, 10 à 20% de l'épaisseur, deuxième couche adhésive - consiste en un polymère adhésif sélectionné parmi les térionomères;
• ladite couche E, 10 à 20% de l'épaisseur, deuxième couche barrière (surtout contre la vapeur d'eau) - consiste en un polymère PA aliphatique;
• ladite couche F, 5 à 15% de l'épaisseur, troisième couche adhésive - consiste en un polymère adhésif sélectionné parmi les térionomères;
• ladite couche G, 5 à 25% de l'épaisseur, couche externe et troisième couche barrière (surtout contre la vapeur d'eau) - consiste en un polymère polyamide PA 6/66.

9. Le film, tel que revendiqué à les revendications 1 et 2, **caractérisé en ce que**
• ladite couche A, 10 à 30% de l'épaisseur, couche de soudage - constitue la partie interne de l'emballage et elle est formée d'un plastomère à base d'éthylène ou d'octène ;
• ladite couche B, 5 à 15% de l'épaisseur, première couche adhésive - consiste en un LLDPE modifié avec de l'anhydride maléique;
• ladite couche C, 10 à 20% de l'épaisseur, première couche barrière (surtout contre la vapeur d'eau) - consiste en un mélange de polyamides PA 6/66 + PA amorphe ;
• ladite couche D, 10 à 20% de l'épaisseur, deuxième couche adhésive - consiste en un LLDPE modifié avec de l'anhydride maléique ;
• ladite couche E, 10 à 20% de l'épaisseur, deuxième couche barrière (surtout contre la vapeur d'eau) - consiste en un polymère polyamide PA 6/66 ;
• ladite couche F, 5 à 15% de l'épaisseur, troisième couche adhésive - consiste en un LLPE modifié avec de l'anhydride maléique ;
• ladite couche G, 5 à 25% de l'épaisseur, couche externe et troisième couche barrière (surtout contre la vapeur d'eau) - consiste en un polymère polyamide PA 6/66.

10. Le film, tel que revendiqué à les revendications 1 et 2, **caractérisé en ce que**
• ladite couche A, 10 à 30% de l'épaisseur, couche de soudage - constitue la partie interne de l'emballage et elle est formée de LLDPE;
• ladite couche B, 5 à 15% de l'épaisseur, première couche adhésive - consiste en un LLDPE modifié avec de l'anhydride maléique ;
• ladite couche C, 10 à 20% de l'épaisseur, première couche barrière (surtout contre la vapeur d'eau) - consiste en un mélange de polyamides PA 6/66 + PA amorphe ;
• dite couche D, 10 à 20% de l'épaisseur, deuxième couche adhésive - consiste en un LLDPE modifié avec de l'anhydride maléique ;
• ladite couche E, 10 à 20% de l'épaisseur, deuxième couche barrière (surtout contre la vapeur d'eau) - consiste en un polymère polyamide PA 6/66 ;
• ladite couche F, 5 à 15% de l'épaisseur, troisième couche adhésive - consiste en un LLDPE modifié avec de l'anhydride maléique ;
• ladite couche G, 5 à 25% de l'épaisseur, couche externe et troisième couche barrière (surtout contre la vapeur d'eau) - consiste en un polymère polyamide PA 6/66.

11. Le film, tel que revendiqué à les revendications 1 et 2, **caractérisé en ce que**
• ladite couche A, 10 à 30% de l'épaisseur, couche de soudage - constitue la partie interne de l'emballage et elle est formée de LLDPE ;
• ladite couche B, 5 à 15% de l'épaisseur, première couche adhésive - consiste en un copolymère d'acide méthacrylique EVA/éthylène ;
• ladite couche C, 10 à 20% de l'épaisseur, première couche barrière (surtout contre la vapeur d'eau) - consiste en un mélange de polyamides PA 6/66 + PA 6 ;
• ladite couche D, 10 à 20% de l'épaisseur; deuxième couche adhésive - consiste en un copolymère d'acide méthacrylique EVA/éthylène ;
• ladite couche E, 10 à 20% de l'épaisseur, deuxième couche barrière (surtout contre la vapeur d'eau) - consiste en un polymère polyamide PA 6/66 ;
• ladite couche F, 5 à 15% de l'épaisseur, troisième couche adhésive - consiste en un copolymère d'acide méthacrylique EVA/éthylène ;
• Ladite couche G, 5 à 25% de l'épaisseur, couche externe et troisième couche barrière (surtout contre la vapeur d'eau) - consiste en un polymère polyamide PA 6/66.

12. Le film, tel que revendiqué à les revendications 1 et 2, **caractérisé en ce que**
• ladite couche A, 10 à 30% de l'épaisseur, couche de soudage - constitue la partie interne de l'emballage et peut être formée de ionomères contenant du zinc ou du sodium, d'un polyéthylène à faible densité ou d'un polyéthylène à faible densité linéaire (LDPE/LLDPE), ou d'un plastomère à base d'éthylène ou d'octène ;
• Ladite couche B, 10% de l'épaisseur, première couche adhésive - consiste en un polymère adhésif sélectionné parmi des térionomères ou des copolymères d'éthylène modifiés avec de l'anhydride maléique ou un copolymère d'acide méthacrylique EVA/éthylène ;
• Ladite couche C, 15% de l'épaisseur, première couche barrière (surtout contre la vapeur d'eau) - consiste en un polymère polyamide sélectionné parmi PA 6, PA 6/66, PA amorphe ou aliphatique ou un mélange de ceux-ci, si possible avec l'adjonction de térionomères;
• Ladite couche D, 15% de l'épaisseur, deuxième couche adhésive - consiste en un polymère adhésif sélectionné parmi des térionomères ou des copolymères d'éthylène modifiés avec de l'anhydride maléique ou un copolymère d'acide méthacrylique EVA/éthylène, et peut être identique ou différente de la couche B ;
• Ladite couche E, 15% de l'épaisseur, deuxième couche barrière (surtout contre la vapeur d'eau) - consiste en un polymère polyamide sélectionné parmi PA 6, PA 6/66, PA amorphe ou aliphatique ou un mélange de ceux-ci, si possible avec l'adjonction de térionomères, et peut être identique ou différente de la couche C;
• Ladite couche F, 10% de l'épaisseur, troisième couche adhésive - consiste en un polymère adhésif sélectionné parmi des térionomères ou des copolymères d'éthylène modifiés avec de l'anhydride maléique, ou un copolymère d'acide méthacrylique EVA/éthylène, et peut être identique ou différente des couches B et D;
• Ladite couche G, 15% de l'épaisseur, couche externe et couche barrière (surtout contre la vapeur d'eau) - consiste en un polymère polyamide sélectionné parmi PA 6 ou PA 6/66.

13. Le film, tel que revendiqué à les revendications 1 et 2, **caractérisé en ce que**
• ladite couche A, 20% de l'épaisseur, couche de soudage - constitue la partie interne de l'emballage et elle est formée de ionomères contenant du zinc ou du sodium ;
• ladite couche B, 10% de l'épaisseur, première couche adhésive - consiste en un térionomère;
• ladite couche C, 15% de l'épaisseur, première couche barrière (surtout contre la vapeur d'eau) - consiste en un polymère polyamide sélectionné parmi les polyamides PA 6/66 ;
• ladite couche D, 15% de l'épaisseur, deuxième couche adhésive - consiste en un polymère adhésif sélectionné parmi les térionomères;
• ladite couche E, 15% de l'épaisseur, deuxième couche barrière (surtout contre la vapeur d'eau) - consiste en un polymère polyamide PA 6/66 ;
• ladite couche F, 10% de l'épaisseur, troisième couche adhésive - consiste en un polymère adhésif sélectionné parmi les térionomères;
• ladite couche G, 15% de l'épaisseur, couche externe et troisième couche barrière (surtout contre la vapeur d'eau) - consiste en un polymère polyamide PA 6/66.

14. Le film, tel que revendiqué à les revendications 1 et 2, **caractérisé en ce que**
• ladite couche A, 20% de l'épaisseur, couche de soudage - constitue la partie interne de l'emballage et elle est formée de ionomères contenant du zinc ou du sodium ;
• ladite couche B, 10% de l'épaisseur, première couche adhésive - consiste en un térionomère;
• ladite couche C, 15% de l'épaisseur, première couche barrière (surtout contre la vapeur d'eau) - consiste en un polymère polyamide sélectionné parmi les polyamides PA 6/66 + PA aliphatique ;
• ladite couche D, 15% de l'épaisseur, deuxième couche adhésive - consiste en un polymère adhésif sélectionné parmi les térionomères;
• Ladite couche E, 15% de l'épaisseur , deuxième couche barrière (surtout contre la vapeur d'eau) - consiste en un polymère polyamide PA 6/66 ;
• ladite couche F, 10% de l'épaisseur, troisième couche adhésive - consiste en un polymère adhésif sélectionné parmi les térionomères;
• Ladite couche G, 15% de l'épaisseur, couche externe et troisième couche barrière (surtout contre la vapeur d'eau) - consiste en un polymère polyamide PA 6/66.

15. Le film, tel que revendiqué à les revendications 1 et 2, **caractérisé en ce que**
• ladite couche A, 20% de l'épaisseur, couche de soudage - constitue la partie interne de l'emballage et elle est formée de ionomères contenant du zinc ou du sodium ;
• ladite couche B, 10% de l'épaisseur, première couche adhésive - consiste en un térionomère;
• ladite couche C, 15% de l'épaisseur, première couche barrière (surtout contre la vapeur d'eau) - consiste en un mélange de polyamides PA 6/66 + PA amorphe mélangés à un térionomère;
• ladite couche D, 15% de l'épaisseur, deuxième couche adhésive - consiste en un polymère adhésif sélectionné parmi les térionomères;
• ladite couche E, 15% de l'épaisseur, deuxième couche barrière (surtout contre la vapeur d'eau) - consiste en un polymère polyamide PA 6/66 ;
• ladite couche F, 10% de l'épaisseur, troisième couche adhésive - consiste en un polymère adhésif sélectionné parmi les térionomères;
• ladite couche G, 15% de l'épaisseur, couche externe et troisième couche barrière (surtout contre la vapeur d'eau) - consiste en un polymère polyamide PA 6/66.

16. Le film, tel que revendiqué à les revendications 1 et 2, **caractérisé en ce que**
• ladite couche A, 20% de l'épaisseur, couche de soudage - constitue la partie interne de l'emballage et elle est formée de ionomères contenant du zinc ou du sodium ;
• ladite couche B, 10% de l'épaisseur, première couche adhésive - consiste en un térionomère;
• ladite couche C, 15% de l'épaisseur, première couche barrière (surtout contre la vapeur d'eau) - consiste en un polymère polyamide sélectionné parmi les polyamides PA 6/66 ;
• ladite couche D, 15% de l'épaisseur, deuxième couche adhésive - consiste en un polymère adhésif sélectionné parmi les térionomères;
• ladite couche E, 15% de l'épaisseur, deuxième couche barrière (surtout contre la vapeur d'eau) - consiste en un mélange de polyamides PA 6/66 + PA amorphe;
• ladite couche F, 10% de l'épaisseur, troisième couche adhésive - consiste en un polymère adhésif sélectionné parmi les térionomères;
• ladite couche G, 15% de l'épaisseur, couche externe et troisième couche barrière (surtout contre la vapeur d'eau) - consiste en un polymère polyamide PA 6/66.

17. Le film, tel que revendiqué à les revendications 1 et 2, **caractérisé en ce que**
• ladite couche A, 20% de l'épaisseur, couche de soudage - constitue la partie interne de l'emballage et elle est formée de ionomères contenant du zinc ou du sodium ;
• ladite couche B, 10% de l'épaisseur, première couche adhésive - consiste en un térionomère;
• ladite couche C, 15% de l'épaisseur, première couche barrière (surtout contre la vapeur d'eau) - consiste en un polymère polyamide sélectionné parmi les polyamides PA 6/66 ;
• ladite couche D, 15% de l'épaisseur, deuxième couche adhésive - consiste en un polymère adhésif sélectionné parmi les térionomères;
• ladite couche E, 15% de l'épaisseur, deuxième couche barrière (surtout contre la vapeur d'eau) - consiste en un mélange de polyamides PA 6/66 + PA amorphe mélangé à un térionomère;
• ladite couche F, 10% de l'épaisseur, troisième couche adhésive - consiste en un polymère adhésif sélectionné parmi les térionomères;
• ladite couche G, 15% de l'épaisseur, couche externe et troisième couche barrière (surtout contre la vapeur d'eau) - consiste en un polymère polyamide PA 6/66.

18. Le film, tel que revendiqué à les revendications 1 et 2, **caractérisé en ce que**
• ladite couche A, 20% de l'épaisseur, couche de soudage - constitue la partie interne de l'emballage et elle est formée de ionomères contenant du zinc ou du sodium ;
• ladite couche B, 10% de l'épaisseur, première couche adhésive - consiste en un térionomère;
• ladite couche C, 15% de l'épaisseur, première couche barrière (surtout contre la vapeur d'eau) - consiste en un polymère polyamide sélectionné parmi les polyamides PA 6/66 ;
• ladite couche D, 15% de l'épaisseur, deuxième couche adhésive - consiste en un polymère adhésif sélectionné parmi les térionomères:
• ladite couche E, 15% de l'épaisseur, deuxième couche barrière (surtout contre la vapeur d'eau) - consiste en un polymère PA aliphatique;
• ladite couche F, 10% de l'épaisseur, troisième couche adhésive - consiste en un polymère adhésif sélectionné parmi les térionomères;
• ladite couche G, 15% de l'épaisseur, couche externe et troisième couche barrière (surtout contre la vapeur d'eau) - consiste en un polymère polyamide PA 6/66.

19. Le film, tel que revendiqué à les revendications 1 et 2, **caractérisé en ce que**
• ladite couche A, 20% de l'épaisseur, couche de soudage - constitue la partie interne de l'emballage et elle est formée d'un plastomère à base d'éthylène ou d'octène ;
• ladite couche B, 10% de l'épaisseur, première couche adhésive - consiste en un LLDPE modifié avec de l'anhydride maléique ;
• ladite couche C, 15% de l'épaisseur, première couche barrière (surtout contre la vapeur d'eau) - consiste en un mélange de polyamides PA 6/66 + PA amorphe ;
• Ladite couche D, 15% de l'épaisseur, deuxième couche adhésive - consiste en un LLDPE modifié avec de l'anhydride maléique :
• ladite couche E, 15% de l'épaisseur, deuxième couche barrière (surtout contre la vapeur d'eau) - consiste en un polymère polyamide PA 6/66 ;
• ladite couche F, 10% de l'épaisseur, troisième couche adhésive - consiste en un LLDPE modifié avec de l'anhydride maléique ;
• ladite couche G, 15% de l'épaisseur, couche externe et troisième couche barrière (surtout contre la vapeur d'eau) - consiste en un polymère polyamide PA 6/66.

20. Le film, tel que revendiqué à les revendications 1 et 2, **caractérisé en ce que**:
• ladite couche A, 20% de l'épaisseur, couche de soudage - constitue la partie interne de l'emballage et elle est formée de LLDPE;
• ladite couche B, 10% de l'épaisseur, première couche adhésive- consiste en un LLDPE modifié avec de l'anhydride maléique ;
• ladite couche C, 15% de l'épaisseur, première couche barrière (surtout contre la vapeur d'eau) - consiste en un mélange de polyamides PA 6/66 + PA amorphe ;
• ladite couche D, 15% de l'épaisseur, deuxième couche adhésive - consiste en un LLDPE modifié avec de l'anhydride maléique ;
• ladite couche E, 15% de l'épaisseur, deuxième couche barrière (surtout contre la vapeur d'eau) - consiste en un polymère polyamide PA 6/66 ;
• ladite couche F, 10% de l'épaisseur, troisième couche adhésive - consiste en un LLDPE modifié avec de l'anhydride maléique ;
• ladite couche G, 15% de l'épaisseur, couche externe et troisième couche barrière (surtout contre la vapeur d'eau) - consiste en un polymère polyamide PA 6/66.

21. Le film, tel que revendiqué à les revendications 1 et 2, **caractérisé en ce que**
• ladite couche A, 20% de l'épaisseur, couche de soudage - constitue la partie interne de l'emballage et elle est formée de LLDPE;
• ladite couche B, 10% de l'épaisseur, première couche adhésive - consiste en un copolymère d'acide méthacrylique EVA/éthylène ;
• ladite couche C, 15% de l'épaisseur, première couche barrière (surtout contre la vapeur d'eau) - consiste en un mélange de polyamides PA 6/66 + PA 6;
• ladite couche D, 15% de l'épaisseur, deuxième couche adhésive - consiste en un copolymère d'acide méthacrylique EVA/éthylène ;
• ladite couche E, 15% de l'épaisseur, deuxième couche barrière (surtout contre la vapeur d'eau) - consiste en un polymère polyamide PA 6/66;
• ladite couche F, 10% de l'épaisseur, troisième couche adhésive - consiste en un copolymère d'acide méthacrylique EVA/éthylène ;
• ladite couche G, 15% de l'épaisseur, couche externe et troisième couche barrière (surtout contre la vapeur d'eau) - consiste en un polymère polyamide PA 6/66.
